# EUROPEAN PATENT APPLICATION

(11) **EP 4 712 172 A1**
(43) Date of publication of application: **18.03.2026**
(21) Application number: 25200332.2
(22) Date of filing: 04.09.2025
(51) Int. Cl.: H01M 4/66, H01M 4/70, H01M 10/052, H01M 10/0525

(54) **COMPOSITE SUBSTRATE FOR RECHARGEABLE LITHIUM BATTERY AND RECHARGEABLE LITHIUM BATTERY INCLUDING THE SAME**

(30) Priority: 12.09.2024 KR 20240124646
(71) Applicant: SAMSUNG SDI CO., LTD., Yongin-si, Gyeonggi-do 17084 (KR)
(72) Inventor: LEE, Wonhyung, 17084 Yongin-si (KR); KIM, Suhyun, 17084 Yongin-si (KR); CHA, Jungwook, 17084 Yongin-si (KR); KIM, Junyoung, 17084 Yongin-si (KR)
(74) Representative: Maiwald GmbH

(57) **Abstract**

Disclosed is a composite substrate for a rechargeable lithium battery including a support layer having a first surface and a second surface that are opposite to each other, a first metal layer on the first surface, and a second metal layer on the second surface. The support layer includes a plurality of first through parts penetrating the first surface and spaced apart from each other along a first direction, and a plurality of second through parts penetrating the second surface and spaced apart from each other along the first direction. The plurality of first through parts and the plurality of second through parts are alternately disposed along the first direction, and the first direction is substantially parallel to the first surface.

## Description

### BACKGROUND

The present disclosure herein relates to a composite substrate for a rechargeable lithium battery, and a rechargeable lithium battery including the composite substrate.

With increasing presence of battery-using electronic devices, such as, e.g., mobile phones, laptop computers, electric vehicles, and the like, demand for a rechargeable battery with high energy density and high capacity has increased. Accordingly, improving performance of rechargeable lithium batteries may be advantageous.

The rechargeable lithium battery includes a positive electrode and a negative electrode, each including an active material capable of intercalation and deintercalation of lithium ions, and an electrolyte solution. Electrical energy is produced by oxidation and reduction reactions when the lithium ions are intercalated and deintercalated into/from the positive electrode and the negative electrode.

### SUMMARY

Examples of the present disclosure include a composite substrate with improved tensile strength.

Examples of the present disclosure also include a rechargeable lithium battery including the composite substrate.

An example embodiment of the present disclosure includes a composite substrate for a rechargeable lithium battery including a support layer including having a first surface and a second surface that are opposite to each other, a first metal layer disposed on the first surface, and a second metal layer disposed on the second surface. The support layer includes a plurality of first through parts penetrating the first surface and spaced apart from each other along a first direction, and a plurality of second through parts penetrating the second surface and spaced apart from each other along the first direction. The plurality of first through parts and the plurality of second through parts are alternately disposed along the first direction, and the first direction is parallel or substantially parallel to the first surface.

In an example embodiment of the present disclosure, a rechargeable lithium battery includes a composite substrate, and a battery cell on the composite substrate, the composite substrate includes a support layer having a first surface and a second surface that are opposite to each other, a first metal layer disposed on the first surface, and a second metal layer disposed on the second surface. The support layer includes a plurality of first through parts penetrating the first surface and spaced apart from each other along a first direction, and a plurality of second through parts penetrating the second surface and spaced apart from each other along the first direction. The plurality of first through parts and the plurality of second through parts are alternately disposed along the first direction, and the first direction is parallel or substantially parallel to the first surface.

### BRIEF DESCRIPTION OF THE FIGURES

The accompanying drawings are included to provide a further understanding of the present disclosure, and are incorporated in, and constitute a part of, this specification. The drawings illustrate example embodiments of the present disclosure and, together with the description, be configured help explain principles of the present disclosure. In the drawings:
FIG. 1 is a simplified conceptual diagram illustrating a rechargeable lithium battery according to example embodiments of the present disclosure;
FIGS. 2 to 5 are schematic views each illustrating a rechargeable lithium battery according to an example embodiment;
FIG. 6 is a cross-sectional view illustrating a rechargeable lithium battery including a composite substrate according to example embodiments of the present disclosure;
FIG. 7 is a plan view of the composite substrate of FIG. 6;
FIG. 8 is a cross-sectional view according to line A-A' of FIG. 7;
FIG. 9 is an enlarged view of area M of FIG. 8;
FIG. 10 is a plan view of a composite substrate according to example embodiments of the present disclosure;
FIG. 11 is a cross-sectional view of a composite substrate, taken along line A-A' of FIG. 7, according to example embodiments of the present disclosure;
FIG. 12 is a cross-sectional view of a composite substrate, taken along line A-A' of FIG. 7, according to example embodiments of the present disclosure; and
FIG. 13 is a cross-sectional view of a composite substrate, taken along line A-A' of FIG. 7, according to example embodiments of the present disclosure.

### DETAILED DESCRIPTION

In order to fully understand the configuration and effect of the present disclosure, example embodiments of the present disclosure are described below in more detail with reference to the accompanying drawings. The present disclosure may, however, be embodied in various forms and should not be construed as limited to the example embodiments set forth herein, and various changes and modifications can be made. Rather, these example embodiments are provided so that this disclosure is thorough and complete, and fully conveys the scope of the present disclosure to those skilled in the art to which the present disclosure pertains.

In this specification, it is understood that, when an element is referred to as being "on" another element, the element may be "directly on" the other element, or intervening elements may be present therebetween. In the drawings, thicknesses of components may be exaggerated for effectively explaining the technical contents. Like reference numerals or symbols refer to like elements throughout the specification.

The singular forms are intended to include the plural forms as well, unless the context clearly indicates otherwise. In addition, unless otherwise specially noted, the phrase "A or B" may indicate "including A but not B, B but not A, or A and B." The terms "comprises/includes" and/or "comprising/including" used in this description do not exclude the presence or addition of one or more other components.

In this specification, "combination thereof" may refer to a mixture, a stack, a composite, a copolymer, an alloy, a blend, and a reaction product of components.

Unless otherwise defined in this specification, a particle diameter may be an average particle diameter. Also, the particle diameter indicates an average particle diameter (D50) which refers to a diameter of particles at a cumulative volume of about 50 vol% in a particle size distribution. The average particle diameter (D50) may be measured by a method widely known to those skilled in the art, for example, may be measured by a particle size analyzer, or may also be measured using a transmission electron microscope (TEM) image or a scanning electron microscope (SEM) image. Alternatively, the average particle diameter is measured by a measuring device using dynamic light-scattering, wherein the number of particles is counted for each particle size range by performing data analysis, and an average particle diameter (D50) value may then be obtained by calculation therefrom. Also, the average particle diameter may be measured using a laser diffraction method. When measured by the laser diffraction method, for example, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter (D50) based on about 50% of particle size distribution in the measurement instrument may then be calculated.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

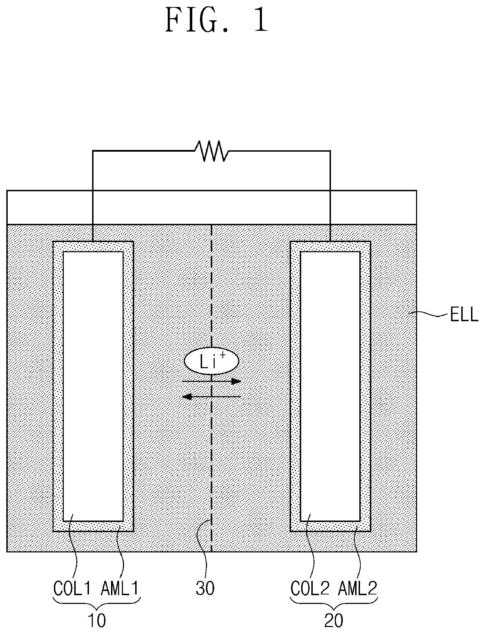

FIG. 1 is a simplified conceptual diagram illustrating a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other with the separator 30 therebetween. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material, and may further include a binder and/or a conductive material (e.g., an electrically conductive material).

For example, the positive electrode 10 may further include an additive that may be configured as a sacrificial positive electrode.

An amount of the positive electrode active material in the positive electrode active material layer AML1 may be in a range of about 90 wt% to about 99.5 wt% based on 100 wt% of the positive electrode active material layer AML1. An amount of each of the binder and the conductive material may be in a range of about 0.5 wt% to about 5 wt% based on 100 wt% of the positive electrode active material layer AML1.

The binder is configured to attach the positive electrode active material particles to each other and also to attach the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, and the like, as non-limiting examples.

The conductive material may be included to impart conductivity (e.g., electrical conductivity) to the electrode. Any material that does not cause chemical change (e.g., does not cause an undesirable chemical change in the rechargeable lithium battery), and that conducts electrons, may be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, and the like, in a form of a metal powder or a metal fiber; a conductive polymer such as a polyphenylene derivative; or a mixture thereof.

Al may be included as the current collector COL1, but the material is not limited thereto.

### Positive Electrode Active Material

The positive electrode active material in the positive electrode active material layer AML1 may include a compound (lithiated intercalation compound) that is capable of reversibly intercalating and deintercalating lithium. For example, at least one of a composite oxide of lithium and a metal such as or including at least one of cobalt, manganese, nickel, and combinations thereof may be included.

The composite oxide may be or include a lithium transition metal composite oxide. Examples of the composite oxide may include lithium at least one of nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following chemical formulas may be included. LiₐA_{1-b}X_{b}O_{2-c}D_{c}(0.90≤a≤1.8, 0<b≤0.5, and 0≤c≤0.05); LiₐMn_{2-b}X_{b}O_{4-c}D_{c}(0.90≤a≤1.8, 0<b≤0.5, and 0≤c≤0.05); LiₐNi_{1-b-c}Co_{b}X_{c}O_{2-α}D_{α}(0.90≤a≤1.8, 0<b≤0.5, 0≤c≤0.5, and 0<α<2); LiₐNi_{1-b-c}Mn_{d}X_{c}O_{2-α}D_{α}(0.90≤a≤1.8, 0<b≤0.5, 0≤c≤0.5, and 0<α<2); LiₐNi_{b}Co_{c}L¹_{d}GₑO₂(0.90≤a≤1.8, 0≤b≤0.9, 0≤c≤0.5, 0≤d≤0.5, and 0≤e≤0.1); LiₐNiG_{b}O₂(0.90≤a≤1.8 and 0.001≤b≤0.1); LiₐCoG_{b}O₂(0.90≤a≤1.8 and 0.001≤b≤0.1); LiₐMn_{1-b}G_{b}O₂(0.90≤a≤1.8 and 0.001≤b≤0.1); LiₐMn₂G_{b}O₄(0.90≤a≤1.8 and 0.001≤b≤0.1); LiₐMn_{1-g}G_{g}PO₄(0.90≤a≤1.8 and 0≤g≤0.5); Li_{(3-f)}Fe₂(PO₄)₃(0≤f≤2); and LiₐFePO₄(0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of achieving high capacity, and can be applied to a high-capacity, high-density rechargeable lithium battery.

### Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may be configured to attach the negative electrode active material particles to each other, and to attach the negative electrode active material to the current collector COL2. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any material that does not cause chemical change (e.g., does not cause an undesirable chemical change in the rechargeable lithium battery), and that conducts electrons, may be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles with amorphous carbon applied onto the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be included in combination with a carbon-based negative electrode active material.

### Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one surface, or on both surfaces of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Electrolyte Solution ELL

The electrolyte solution ELL for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether bond), and the like); amides such as dimethylformamide; dioxolanes such as 1,3-dioxolane, 1,4-dioxolane, and the like; sulfolanes, and the like.

The non-aqueous organic solvents may be included alone or in combination of two or more.

For example, when using a carbonate-based solvent, a cyclic carbonate and a chain carbonate may be mixed and included, and the cyclic carbonate and the chain carbonate may be mixed in a volume ratio in a range of about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

### Rechargeable Lithium Battery

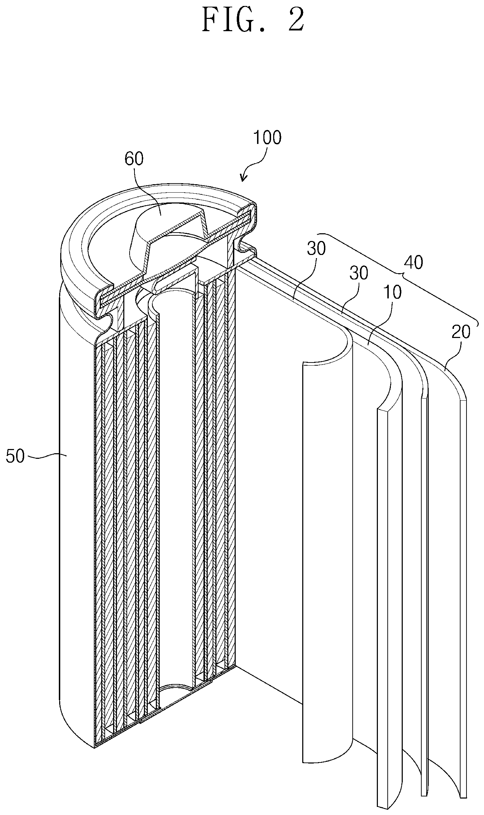

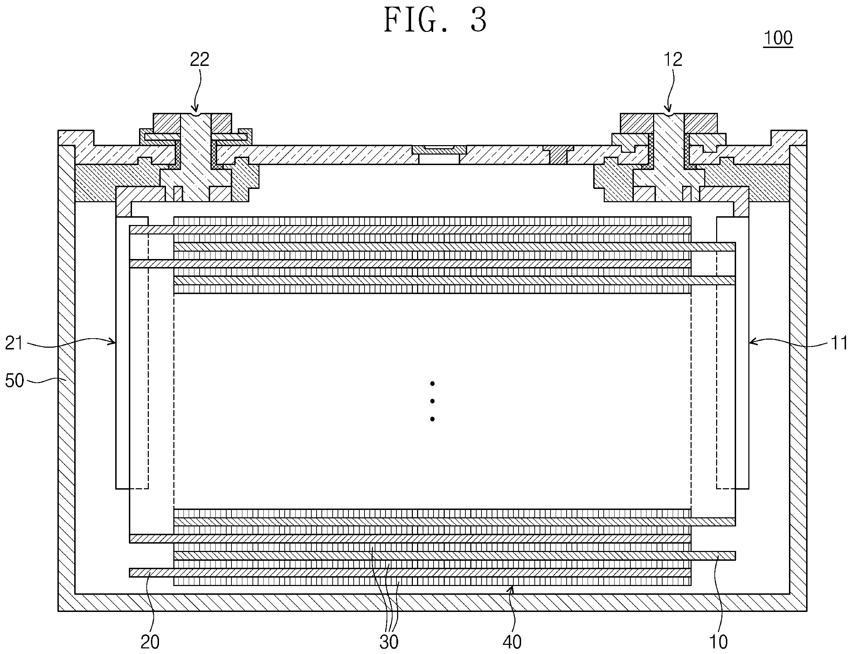

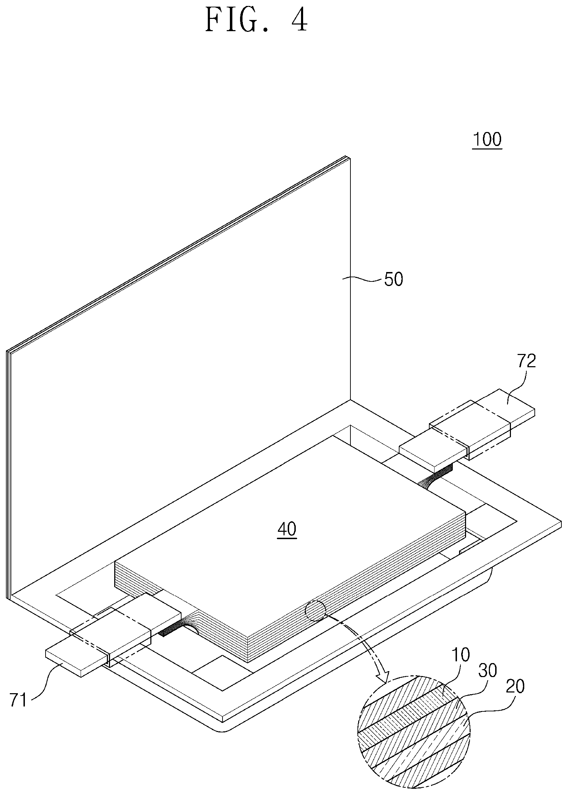

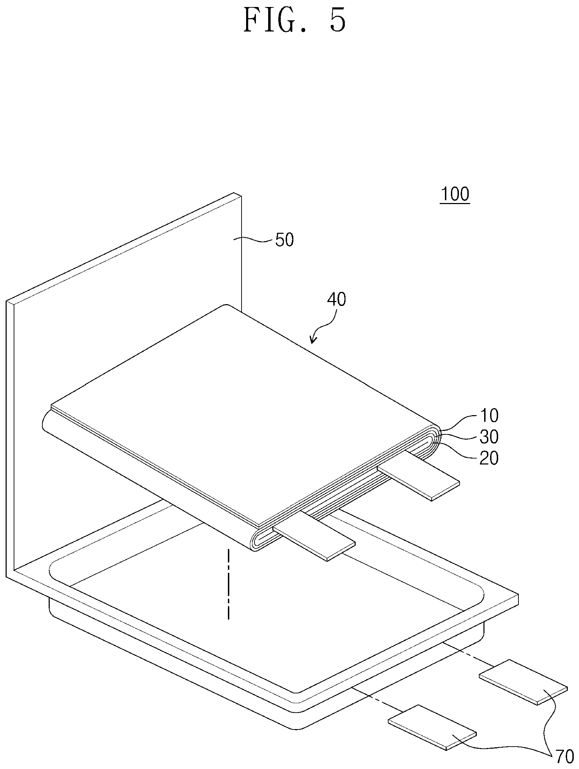

The rechargeable lithium battery may be classified into cylindrical, prismatic, pouch, coin-type batteries, and the like depending on shape thereof. FIGS. 2 to 5 are schematic views illustrating a rechargeable lithium battery according to an embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive electrode lead tab 11, a positive terminal 12, a negative electrode lead tab 21, and a negative terminal 22. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside.

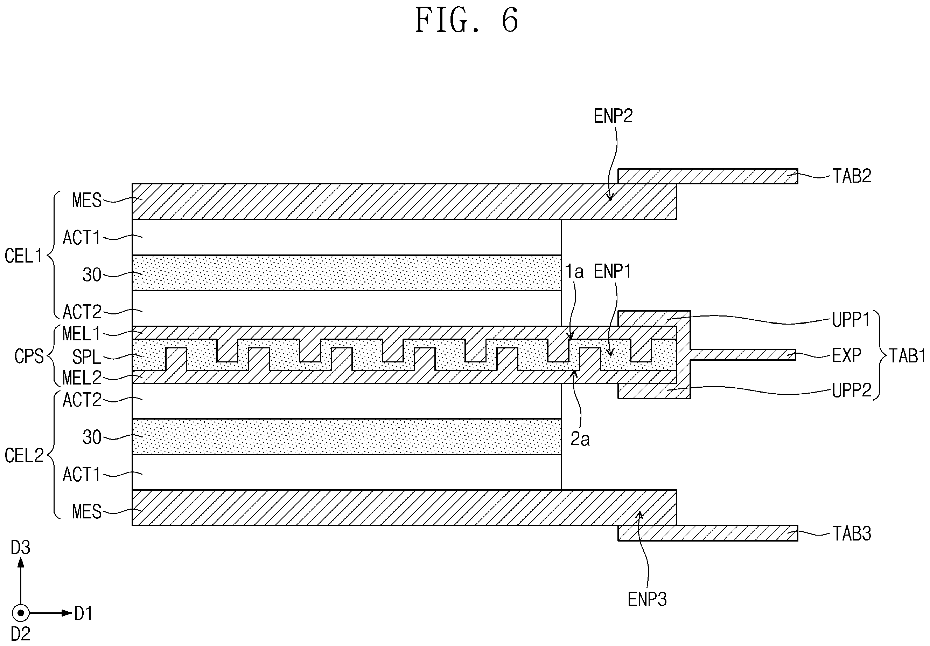

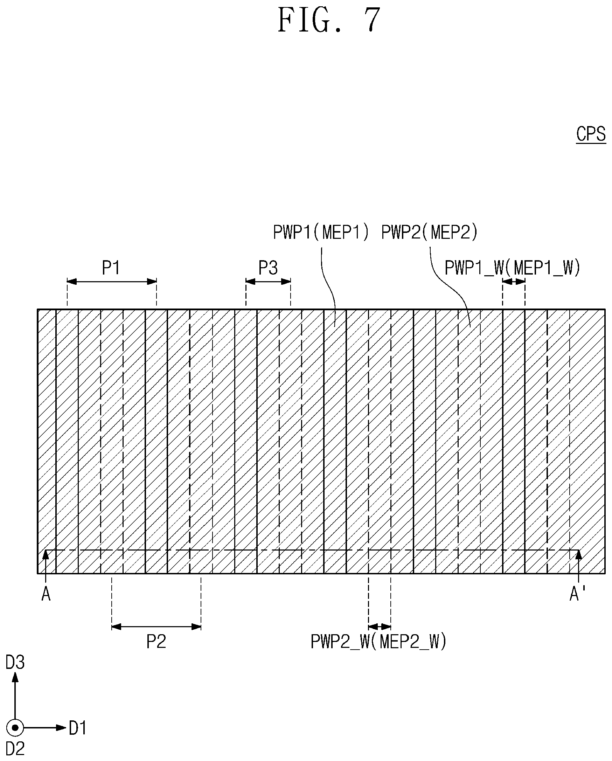

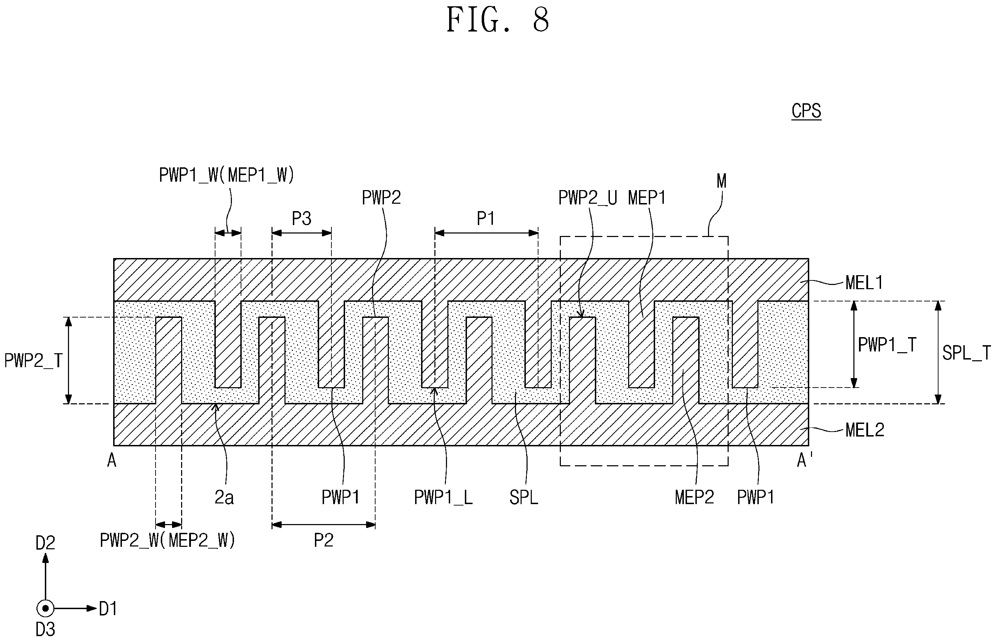

FIG. 6 is a cross-sectional view illustrating a rechargeable lithium battery including a composite substrate according to example embodiments of the present disclosure. FIG. 7 is a plan view of the composite substrate of FIG. 6. FIG. 8 is a cross-sectional view according to line A-A' of FIG. 7. For simplifying the description, a duplicate description of the rechargeable lithium battery described with reference to FIGS. 1 to 5 is omitted.

Referring to FIG. 6, a composite substrate CPS, a first battery cell CEL1 on one surface of the composite substrate CPS, and a second battery cell CEL2 on the other surface of the composite substrate CPS may be provided. The first battery cell CEL1, the second battery cell CEL2, and the composite substrate CPS in FIG. 6 may constitute one bi-cell. The first battery cell CEL1, the second battery cell CEL2, and the composite substrate CPS in FIG. 6 may constitute the electrode assembly 40 described above with reference to FIGS. 3 to 5.

The first battery cell CEL1 and the second battery cell CEL2 may each include a first active material layer ACT1, a separator 30, a second active material layer ACT2, and a metal substrate MES. The first active material layer ACT1 may be provided onto the composite substrate CPS. The second active material layer ACT2 may be spaced apart from the first active material layer ACT1 with the separator 30 therebetween. The metal substrate MES may be provided onto the first active material layer ACT1.

The first active material layer ACT1 may be any one of the positive electrode active material layer AML1 and the negative electrode active material layer AML2, described above with reference to FIG. 1. The second active material layer ACT2 may be the other one among the positive electrode active material layer AML1 and the negative electrode active material layer AML2, described above with reference to FIG. 1. According to an example embodiment of the present disclosure, the first active material layer ACT1 may be the positive electrode active material layer AML1, and the second active material layer ACT2 may be the negative electrode active material layer AML2. The metal substrate MES may be, or correspond to, the current collector COL1 or COL2 described above with reference to FIG. 1.

The composite substrate CPS may include a support layer SPL, and a first metal layer MEL1 and a second metal layer MEL2 respectively provided onto a first surface 1a and a second surface 2a of the support layer SPL opposite to each other. The content of the support layer SPL in the composite substrate CPS may be in a range of about 20 wt% to about 30 wt% on the basis of the composite substrate 100 wt%.

The first metal layer MEL 1 of the composite substrate CPS may be in contact with the second active material layer ACT2 of the first battery cell CEL1. The second metal layer MEL2 of the composite substrate CPS may be in contact with the second active material layer ACT2 of the second battery cell CEL2. The first and second metal layers MEL1 and MEL2 of the composite substrate CPS may respectively correspond to the current collectors COL1 and COL2 described above with reference to FIG. 1.

The support layer SPL may include a polymer film. For example, the support layer SPL may have a thickness in a range of about 3 µm to about 10 µm. The support layer SPL may include, for example, at least one of a polyethylene film, a polypropylene film, a polyvinylidene chloride film, or a multi-layer film in combination thereof. The support layer SPL may have desired or improved ion permeability and desired or improved mechanical strength.

The first and second metal layers MEL1 and MEL2 may each include at least one of aluminum, an aluminum alloy, copper, a copper alloy, nickel, a nickel alloy, titanium, a titanium alloy, iron, an iron alloy, silver, or a silver alloy.

According to an example embodiment of the present disclosure, the first and second metal layers MEL1 and MEL2 may each be greater than about 0 µm, and about 5 µm or less. For example, the first and second metal layers MEL1 and MEL2 may each have a thickness in a range of about 200 nm to about 5 µm. The support layer SPL may have a thickness in a range of about 2 µm to about 10 µm. The thickness of the support layer SPL may be larger than the thickness of each of, or at least one of, the first and second metal layers MEL1 and MEL2.

The composite substrate CPS may include a first end portion ENP1 on one end thereof. The metal substrate MEL of the first battery cell CEL1 may include a second end portion ENP2 on one end thereof. The metal substrate MES of the second battery cell CEL2 may include a third end portion ENP3 on one end thereof.

A first tab TAB1 may be provided to the first end portion ENP1 of the composite substrate CPS. The first tab TAB 1 may include a first connection part UPP1, a second connection part UPP2, and an extension part EXP. The first connection part UPP1 may be in contact with the first metal layer MEL1 of the composite substrate CPS. The second connection part UPP2 may be in contact with the second metal layer MEL2 of the composite substrate CPS. The extension part EXP may connect the first connection part UPP1 and the second connection part UPP2 to each other. The extension part EXP may extend substantially horizontally from the first end portion ENP1 toward a first direction D1.

By the first tab TAB1, the first metal layer MEL1 and the second metal layer MEL2 may be electrically connected to each other. The first tab TAB1 may be configured to apply a common voltage to the first metal layer MEL1 and the second metal layer MEL2.

A second tab TAB2 may be provided to the second end portion ENP2 of the metal substrate MES. The second tab TAB2 may be configured to apply a voltage to the metal substrate MES of the first battery cell CEL1. A third tab TAB3 may be provided to the third end portion ENP3 of the metal substrate MES. The third tab TAB3 may be configured to apply a voltage to the metal substrate MES of the second battery cell CEL2.

The first tab TAB1 may constitute any one of the positive electrode tab (or positive electrode lead tab) and the negative electrode tab (or negative electrode lead tab), described above with reference to FIGS. 2 to 4. The second and third tabs TAB2 and TAB3 may constitute the other one of the positive electrode tab (or positive electrode lead tab) and the negative electrode tab (or negative electrode lead tab), described above with reference to FIGS. 2 to 4.

Referring to FIGS. 7 and 8, the support layer SPL may include a plurality of first through parts PWP1 penetrating the first surface 1a and spaced apart from each other along a first direction D1. Each of, or at least one of, the plurality of first through parts PWP1 may have a substantially bar shape extending in a third direction D3. The third direction D3 may be a direction parallel or substantially parallel to the first surface 1a, and crossing the first direction D1.

The support layer SPL may include a plurality of second through parts PWP2 penetrating the second surface 2a and spaced apart from each other along the first direction D1. Each of, or at least one of, the plurality of second through parts PWP2 may have a substantially bar shape extending in the third direction D3. Unlike what is illustrated in the drawing, each of, or at least one of, the plurality of first through parts PWP1 and the plurality of second through parts PWP2 may have various shapes such as, e.g., a cone shape, a square shape, or the like.

The plurality of first through parts PWP1 and the plurality of second through parts PWP2 may be alternately disposed along the first direction D1 parallel or substantially parallel to the first surface 1a.

A lowermost surface PWP1_L of each of the plurality of first through parts PWP1 may be positioned at a higher level than the second surface 2a. A length PWP1_T of each of the plurality of first through parts PWP1 in a second direction D2 may be larger than half a thickness SPL_T of the support layer SPL in the second direction D2. The length PWP1_T of each of, or at least one of, the plurality of first through parts PWP1 in the second direction D2 may be, for example, in a range of about 1 µm to about 3 µm. The second direction D2 may be a direction substantially perpendicular to the first surface 1a.

The plurality of first through parts PWP1 may be spaced apart from each other by a first pitch P1 along the first direction D1. The first pitch P1 may be, for example, in a range of about 0.5 µm to about 4 µm. A width PWP1_W of the plurality of first through parts PWP1 in the first direction D1 may be, for example, in a range of about 1.5 µm to about 4 µm.

An uppermost surface PWP2_U of each of the plurality of second through parts PWP2 may be positioned at a lower level than the first surface 1a. A length PWP2_T of each of, or at least one of, the plurality of second through parts PWP2 in the second direction D2 may be larger than half the thickness SPL_T of the support layer SPL in the second direction D2. The length PWP2_T of each of the plurality of second through parts PWP2 in the second direction D2 may be, for example, in a range of about 1 µm to about 3 µm.

The plurality of second through parts PWP2 may be spaced apart from each other by a second pitch P2 along the first direction D1. The second pitch P2 may be, for example, in a range of about 0.5 µm to about 4 µm. The second pitch P2 may be the same as, or different from, the first pitch P1. A width PWP2_W of the plurality of second through parts PWP2 in the first direction D1 may be, for example, in a range of about 1.5 µm to about 4 µm.

Each of, or at least one of, the plurality of first through parts PWP1 may be spaced apart from an adjacent second through part, among the plurality of second through parts PWP2, by a third pitch P3 along the first direction D1. The third pitch P3 may be, for example, in a range of about 0.25 µm to about 2 µm.

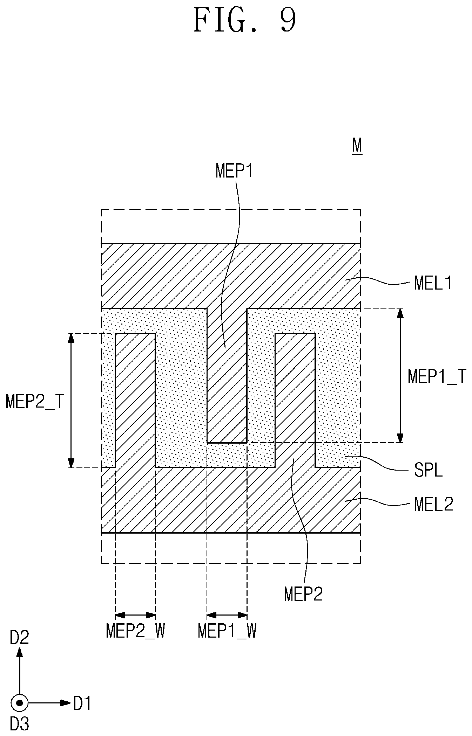

Referring to FIGS. 7 and 9, the first metal layer MEL1 may be disposed on the first surface 1a of the support layer SPL. The first metal layer MEL1 may include a plurality of first protruding parts MEP1 substantially filling the plurality of first through parts PWP1, respectively. Each of, or at least one of, the plurality of first protruding parts MEP1 may have, for example, a substantially bar shape extending in the third direction D3.

A lowermost surface of each of, or at least one of, the plurality of first protruding parts MEP1 may be positioned at a lower level than the first surface 1a. A width MEP1_W of the plurality of first protruding parts MEP1 in the first direction D1 may be, for example, in a range of about 1.5 µm to about 4 µm. A length MEP1 T of the plurality of first protruding parts MEP1 in the second direction D2 may be, for example, in a range of about 1 µm to about 3 µm.

The second metal layer MEL2 may be disposed on the second surface 2a of the support layer SPL. The second metal layer MEL2 may include a plurality of second protruding parts MEP2 substantially filling the plurality of second through parts PWP2, respectively. Each of, or at least one of, the plurality of second protruding parts MEP2 may have, for example, a substantially bar shape extending in the third direction D3.

An uppermost surface of each of, or at least one of, the plurality of second protruding parts MEP2 may be positioned at a higher level than the second surface 2a. A width MEP2_W of each of the plurality of second protruding parts MEP2 in the first direction D1 may be, for example, in a range of about 1.5 µm to about 4 µm. A length MEP2_T of each of the plurality of second protruding parts MEP2 in the second direction D2 may be, for example, in a range of about 1 µm to about 3 µm.

According to example embodiments of the present disclosure, the support layer SPL may include a plurality of through parts PWP1 and PWP2, and the plurality of protruding parts MEP1 and MEP2 may substantially fill the corresponding through parts(PWP1, PWP2). The content of the metal layer may increase in the composite substrate. When an external force is applied to the composite substrate, the plurality of protruding parts MEP1 and MEP2 may constitute a support. The composite substrate may provide a desired or improved tensile strength, and a rechargeable lithium battery including the composite substrate may have improved stability.

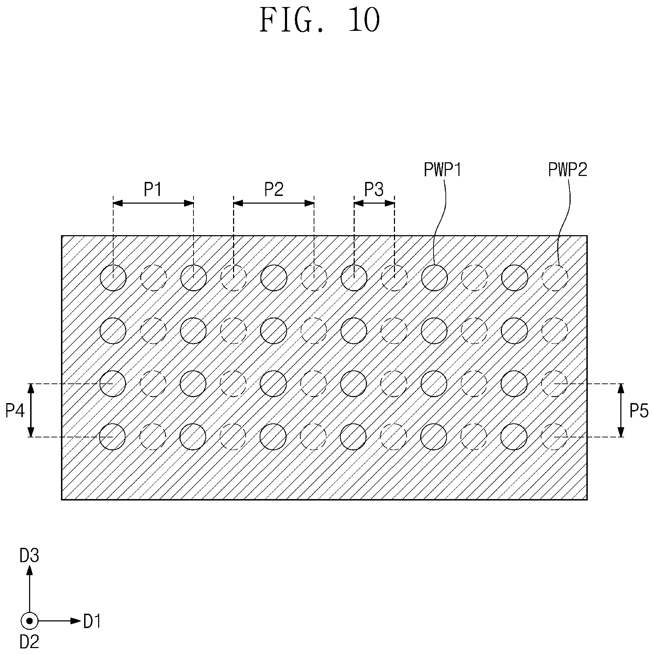

FIG. 10 is a plan view of a composite substrate according to some example embodiments of the present disclosure. For simplifying the description, duplicate description of the composite substrate described with reference to FIGS. 6 to 9 is omitted.

Referring to FIG. 10, a support layer SPL may include a plurality of first through parts PWP1 penetrating a first surface 1a and spaced apart from each other along a first direction D1. The plurality of first through parts PWP1 may be spaced apart from each other by a first pitch P1 along the first direction D1. The first pitch P1 may be, for example, in a range of about 0.5 µm to about 4 µm.

The plurality of first through parts PWP1 may be spaced apart from each other along a third direction D3. The plurality of first through parts PWP1 may be spaced apart from each other by a fourth pitch P4 along the third direction D3. The first pitch P1 and the fourth pitch P4 may be different from each other. The fourth pitch P4 may be, for example, in a range of about 0.5 µm to about 4 µm.

Each of, or at least one of, the plurality of first through parts PWP1 may have a substantially circular shape on a plane, as illustrated in FIG. 10. The shape of the plurality of first through parts is not limited thereto, and may have various shapes, unlike what is illustrated in the drawing.

The support layer SPL may include a plurality of second through parts PWP2 penetrating a second surface 2a and spaced apart from each other along the first direction D1. The plurality of second through parts PWP2 may be spaced apart from each other by a second pitch P2 along the first direction D1. The second pitch P2 may be, for example, in a range of about 0.5 µm to about 4 µm.

The plurality of second through parts PWP2 may be spaced apart from each other along the third direction D3. The plurality of second through parts PWP2 may be spaced apart from each other by a fifth pitch P5 along the third direction D3. The second pitch P2 and the fifth pitch P5 may be different from each other. The fifth pitch P5 may be, for example, in a range of about 0.5 µm to about 4 µm.

Each of, or at least one of, the plurality of second through parts PWP2 may have a substantially circular shape on a plane, as illustrated in FIG. 10. The shape of the plurality of second through parts PWP2 is not limited thereto, and may have various shapes, unlike what is illustrated in the drawing.

Each of, or at least one of, the plurality of first through parts PWP1 may be spaced apart from an adjacent second through part, among the plurality of second through parts PWP2, by a third pitch P3 along the first direction D1. The third pitch P3 may be, for example, in a range of about 0.25 µm to about 2 µm.

The other components may be substantially the same as those of the composite substrate described above with reference to FIGS. 6 to 9.

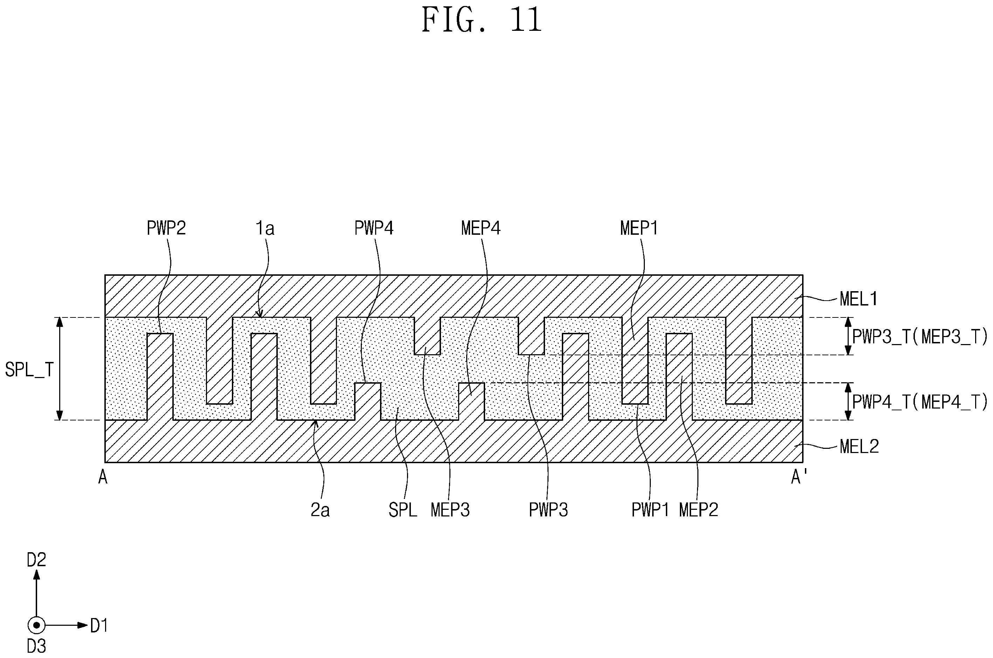

FIG. 11 is a cross-sectional view of a composite substrate according to some example embodiments of the present disclosure. For simplifying the description, duplicate description of the composite substrate described with reference to FIGS. 6 to 9 is omitted.

Referring to FIG. 11, a support layer SPL may include a plurality of first through parts PWP1 penetrating a first surface 1a, and a plurality of third through parts PWP3 penetrating the first surface 1a. The plurality of first through parts PWP1 may be disposed on sides of the support layer SPL. The plurality of first through parts PWP1 may be disposed adjacent to both end portions of the support layer SPL.

The plurality of third through parts PWP3 may be disposed on a center portion (or middle side) of the support layer SPL. The plurality of third through parts PWP3 may be disposed between the plurality of first through parts PWP1 that is disposed on both end portions of the support layer SPL. A length PWP3_T of each of the plurality of third through parts PWP3 in a second direction D2 may be smaller than a length of each of the plurality of first through parts PWP1 in the second direction D2. The length PWP3_T of each of the plurality of third through parts PWP3 in the second direction D2 may be smaller than a thickness SPL_T of the support layer SPL. The length PWP3_T of each of the plurality of third through parts PWP3 in the second direction D2 may be, for example, in a range of about 0.5 µm to about 1.5 µm.

The support layer SPL may include a plurality of second through parts PWP2 penetrating a second surface 2a, and a plurality of fourth through parts PWP4 penetrating the second surface 2a. The plurality of second through parts PWP2 may be disposed on the sides of the support layer SPL. The plurality of second through parts PWP2 may be disposed adjacent to both end portions of the support layer SPL. The plurality of fourth through parts PWP4 may be disposed on the center portion (or middle side) of the support layer SPL. The plurality of fourth through parts PWP4 may be disposed between the plurality of second through parts PWP2 that is disposed on both end portions of the support layer SPL. A length PWP4_T of each of the plurality of fourth through parts PWP4 in the second direction D2 may be smaller than a length of each of the plurality of second through parts PWP2 in the second direction. The length PWP4_T of each of the plurality of fourth through parts PWP4 in the second direction D2 may be smaller than the thickness of the support layer SPL. The length PWP4_T of each of the plurality of fourth through parts PWP4 in the second direction D2 may be, for example, in a range of about 0.5 µm to about 1.5 µm.

A first metal layer MEL1 may include a plurality of first protruding parts MEP1 filling, or substantially filling, the plurality of first through parts PWP1, and a plurality of third protruding parts MEP3 filling, or substantially filling, the plurality of third through parts PWP3. The plurality of first protruding parts MEP1 may be disposed on the sides of the support layer SPL. The plurality of first protruding parts MEP1 may be disposed adjacent to both end portions of the support layer SPL.

The plurality of third protruding parts MEP3 may be disposed on the center portion (or middle side) of the support layer SPL. The plurality of third protruding parts MEP3 may be disposed between the plurality of first protruding parts MEP1 that is disposed on both end portions of the support layer SPL.

A length MEP3_T of each of the plurality of third protruding parts MEP3 in the second direction D2 may be smaller than a length of each of the plurality of first protruding parts MEP1 in the second direction D2. The length MEP3_T of each of the plurality of third protruding parts MEP3 in the second direction D2 may be smaller than the thickness SPL_T of the support layer SPL. The length MEP3_T of each of the plurality of third protruding parts MEP3 in the second direction D2 may be, for example, in a range of about 0.5 µm to about 1.5 µm.

A second metal layer MEL2 may include a plurality of second protruding parts MEP2 filling, or substantially filling, the plurality of second through parts PWP2, and a plurality of fourth protruding parts MEP4 filling, or substantially filling, the plurality of fourth through parts PWP4. The plurality of second protruding parts MEP2 may be disposed on the sides of the support layer SPL. The plurality of second protruding parts MEP2 may be disposed adjacent to both end portions of the support layer SPL.

The plurality of fourth protruding parts MEP4 may be disposed on the center portion (or middle side) of the support layer SPL. The plurality of fourth protruding parts MEP4 may be disposed between the plurality of second protruding parts MEP2 that is disposed on both end portions of the support layer SPL.

A length MEP4_T of each of the plurality of fourth protruding parts MEP4 in the second direction D2 may be smaller than a length of each of the plurality of second protruding parts MEP2 in the second direction D2. The length MEP4_T of each of the plurality of fourth protruding parts MEP2 in the second direction D2 may be smaller than the thickness SPL_T of the support layer SPL. The length MEP4_T of each of the plurality of fourth protruding parts MEP4 in the second direction D2 may be, for example, in a range of about 0.5 µm to about 1.5 µm.

Since the plurality of first and second protruding parts MEP1 and MEP2, each having a large length in the second direction D2, is disposed on the sides of the support layer SPL, tensile strength of the composite substrate may be improved. Since the plurality of third and fourth protruding parts MEP3 and MEP4, each having a small length in the second direction D2, is disposed on the center portion (or middle side) of the support layer SPL, the tensile strength of the composite substrate may be improved without substantial increase in weight of the composite substrate.

The other components may be substantially the same as those of the composite substrate described above with reference to FIGS. 6 to 9.

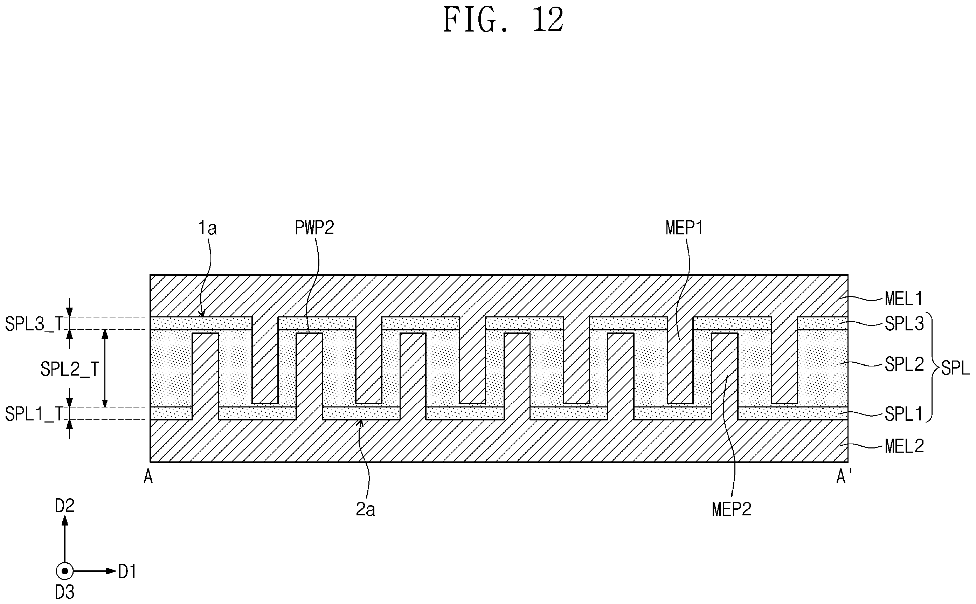

FIG. 12 is a cross-sectional view of a composite substrate according to some example embodiments of the present disclosure. For simplifying the description, duplicate description of the composite substrate described with reference to FIGS. 6 to 9 is omitted.

Referring to FIG. 12, a support layer SPL may have a multi-layer structure. The support layer SPL may include a first support layer SPL1, a second support layer SPL2, and a third support layer SPL3. The first support layer SPL1 may include a second surface 2a, and the third support layer SPL3 may include a first surface 1a. The second support layer SPL2 may be disposed between the first support layer SPL1 and the third support layer SPL3.

A thickness SPL1_T of the first support layer SPL1 may be, for example, in a range of about 0.5 µm to about 1 µm. A thickness SPL3_T of the third support layer SPL3 may be, for example, in a range of about 0.5 µm to about 1 µm. A thickness SPL2_T of the second support layer SPL2 may be, for example, in a range of about 1 µm to about 9 µm.

The first support layer SPL1 and the third support layer SPL3 may include the same material. The first support layer SPL1 and the third support layer SPL3 may include, for example, at least one of a polyethylene film and a polyethylene terephthalate film. The second support layer SPL2 may include, for example, a polypropylene film.

Because the first support layer SPL1 and the third support layer SPL3 include a polyethylene terephthalate film which has a high durability, tensile strength of the composite substrate may be further improved. Since the second support layer SPL2 is made of or include polypropylene that is desired or improved in lightness, the composite substrate may be light-weight.

A plurality of first through parts PWP1 may penetrate the first support layer SPL1, and may be disposed inside the second support layer SPL2. A plurality of second through parts PWP2 may penetrate the third support layer SPL3, and may be disposed inside the second support layer SPL2.

The other components may be substantially the same as those of the composite substrate described above with reference to FIGS. 6 to 9.

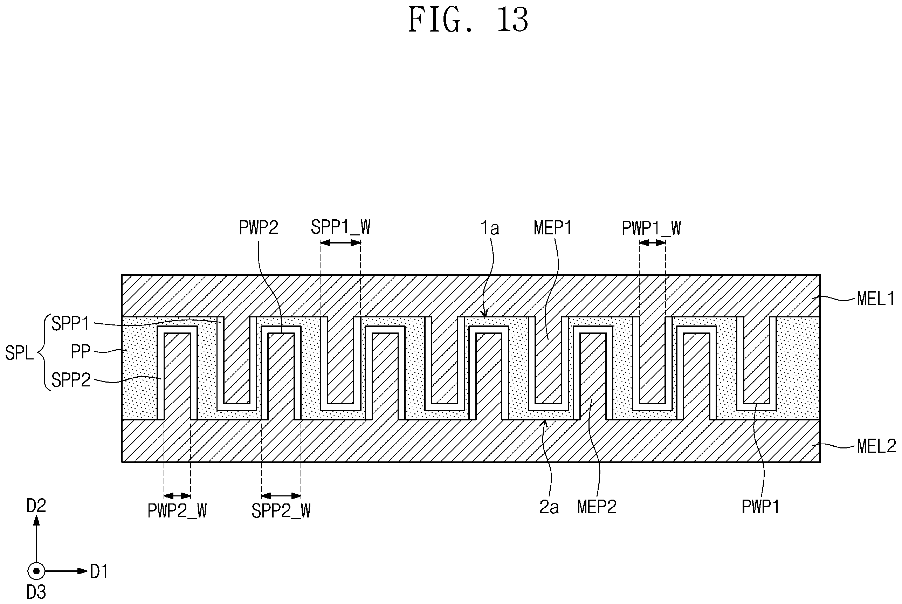

FIG. 13 is a cross-sectional view of a composite substrate according to some example embodiments of the present disclosure. For simplifying the description, duplicate description of the composite substrate described above with reference to FIGS. 6 to 9 is omitted.

Referring to FIG. 13, a support layer SPL may include a plurality of first supporting patterns SPP1 and a plurality of second supporting patterns SPP2. The plurality of first supporting patterns SPP1 may be spaced apart from each other along a first surface 1a in a first direction D1. The plurality of second supporting patterns SPP2 may be spaced apart from each other along a second surface 2a in the first direction D1.

The plurality of first supporting patterns SPP1 and the plurality of second supporting patterns SPP2 may include at least one of a polyethylene film and a polyethylene terephthalate film. The support layer SPL may include a polymer layer PP surrounding the plurality of first supporting patterns SPP1 and the plurality of second supporting patterns SPP2. The polymer layer PP may include, for example, a polypropylene film.

Since the plurality of first supporting patterns SPP1 and the plurality of second supporting patterns SPP2 include a polyethylene terephthalate film which has high durability, tensile strength of the composite substrate may be further improved. Because the polymer layer is made of or include polypropylene that is desired or improved in lightness, the composite substrate may be light-weight.

A plurality of first through parts PWP1 may each penetrate a corresponding first supporting pattern among the plurality of first supporting patterns SPP1. A width SPP1_W of each of the plurality of first supporting patterns SPP1 in a first direction D1 may be larger than a width PWP1_W of each of the plurality of first through parts PWP1 in the first direction D1. The width SPP1_W of each of the plurality of first supporting patterns SPP1 in the first direction D1 may be, for example, in a range of about 1.6 µm to about 4.2 µm.

A plurality of second through parts PWP2 may each penetrate a corresponding second supporting pattern among the plurality of second supporting patterns SPP2. A width SPP2_W of each of the plurality of second supporting patterns SPP2 in the first direction D1 may be larger than a width PWP2_W of each of the plurality of second through parts PWP2 in the first direction D1. The width SPP2_W of each of the plurality of second supporting patterns SPP2 in the first direction D1 may be, for example, in a range of about 1.6 µm to about 4.2 µm.

The other components may be substantially the same as those of the composite substrate described above with reference to FIGS. 6 to 9.

Hereinafter, examples of the present disclosure are described in more detail as follows. However, the following examples are only intended to aid understanding of the present disclosure, and the scope of the present disclosure is not limited thereto.

### Example 1

A polyethylene film having a thickness of about 3 µm was prepared as a support layer. First through parts and second through parts were formed on both sides of the support layer. The width of each of the first through parts in a first direction was about 1.5 µm. The length of the first through parts in a perpendicular direction (second direction) was about 1.7 µm. The first through parts were formed to be spaced about 0.5 µm apart from each other.

The width of each of the second through parts in the first direction was about 1.5 µm. The length of the second through parts in the perpendicular direction (second direction) was about 1.7 µm. The second through parts were formed to be spaced about 0.5 µm apart from each other. The first through parts and the second through parts were spaced about 0.25 µm apart from each other, respectively.

Thereafter, both sides of the support layer were coated with copper metal. A first metal layer, which includes first protruding parts filling the first through parts, was formed. A second metal layer which includes second protruding parts filling the second through parts, was formed. The thickness of each of the first metal layer and the second metal layer was about 2 µm.

### Example 2

The width of each of first and second through parts in a first direction was formed to be about 2 µm. The length of each of the first and second through parts in a perpendicular direction (second direction) was formed to be about 2 µm. The first through parts were formed to be spaced about 2 µm apart from each other. The second through parts were formed to be spaced about 2 µm apart from each other. The other preparation processes were performed in the same manner as those of Example 1.

### Example 3

The width of each of first and second through parts in a first direction was formed to be about 3 µm. The length of each of the first and second through parts in a perpendicular direction (second direction) was formed to be about 2.5 µm. The first through parts were formed to be spaced about 3 µm apart from each other. The second through parts were formed to be spaced about 3 µm apart from each other. The other preparation processes were performed in the same manner as those of Example 1.

### Comparative Example

A composite substrate was formed in the same manner as that of examples, with a difference that a plurality of through parts were formed on a support layer. A polyethylene film having a thickness of about 3 µm was prepared as the support layer, and then a first metal layer and a second metal layer were formed on both sides of the support layer. The thickness of each of the first metal layer and the second metal layer was about 2 µm.

### Evaluation Example: Evaluation on Tensile Strength

A tensile test was performed on the composite substrates according to the examples and the composite substrate according to the comparative example. The composite substrates according to the examples and the composite substrate according to the comparative example were pulled until they break to test the tensile strength.

**Table 1:**

| | Tensile strength |
|---|---|
| Example 1 | 300 MPa |
| Example 2 | 350 MPa |
| Example 3 | 450 MPa |
| Comparative Example | 200 MPa |

Referring to Table 1 above, it can be seen that the composite substrates according to the examples had more desired or improved tensile strength than the tensile strength of the composite substrate according to the comparative example.

According to example embodiments of the present disclosure, a support layer, including a first surface and a second surface that are opposite to each other, may be provided. The support layer may include a plurality of first through parts penetrating the first surface, and a plurality of second through parts penetrating the second surface, and a metal layer may include a plurality of protruding parts filling the plurality of through parts. Since the metal layer fill the plurality of first and second through parts, the content of the metal layer may increase in a composite substrate.

When an external force is applied to the composite substrate, the plurality of protruding parts may be configured as a support. The composite substrate may provide desired or improved tensile strength, and a rechargeable lithium battery including the composite substrate may have improved stability.

Although the example embodiments of the present disclosure have been described with reference to the accompanying drawings, it is understood that the present disclosure may be implemented in other forms without changing the technical idea or essential features thereof. Therefore, the example embodiments described above should be understood in all respects as illustrative and not limiting.

## Claims

1. A composite substrate for a rechargeable lithium battery, the composite substrate comprising:
a support layer including a first surface and a second surface that are opposite to each other;
a first metal layer disposed on the first surface; and
a second metal layer disposed on the second surface,
wherein the support layer comprises:
a plurality of first through parts penetrating the first surface and spaced apart from each other along a first direction, and
a plurality of second through parts penetrating the second surface and spaced apart from each other along the first direction,
the plurality of first through parts and the plurality of second through parts are alternately disposed along the first direction, and
the first direction is substantially parallel to the first surface.

2. The composite substrate of claim 1, wherein an uppermost surface of at least one of the plurality of second through parts is positioned at a lower level than the first surface, and
a lowermost surface of at least one of the plurality of first through parts is positioned at a higher level than the second surface.

3. The composite substrate of claim 1 or 2, wherein a width of at least one of the plurality of first through parts in the first direction is in a range of about 1.5 µm to about 4 µm, and
a width of at least one of the plurality of second through parts in the first direction is in a range of about 1.5 µm to about 4 µm.

4. The composite substrate of any one of claims 1 to 3, wherein a length of at least one of the plurality of first through parts in a second direction is larger than half a thickness of the support layer, and
a length of at least one of the plurality of second through parts in the second direction is larger than half the thickness of the support layer.

5. The composite substrate of any one of claims 1 to 4, wherein the plurality of first through parts is spaced apart from each other by a first pitch along the first direction, and
the first pitch is in a range of about 0.5 µm to about 4 µm.

6. The composite substrate of any one of claims 1 to 5, wherein a length of at least one of the plurality of first through parts in a second direction is in a range of about 1 µm to about 3 µm,
a length of at least one of the plurality of second through parts in the second direction is in a range of about 1 µm to about 3 µm, and
the second direction is substantially perpendicular to the first surface.

7. The composite substrate of any one of claims 1 to 6, wherein the first metal layer comprises a plurality of first protruding parts respectively substantially filling the plurality of first through parts, and
the second metal layer comprises a plurality of second protruding parts respectively substantially filling the plurality of second through parts.

8. The composite substrate of any one of claims 1 to 7, wherein a content of the support layer in the composite substrate is in a range of about 20 wt% to about 30 wt% on the basis of the composite substrate 100 wt%.

9. The composite substrate of any one of claims 1 to 8, wherein at least one of the first metal layer and the second metal layer comprises at least one of aluminum, an aluminum alloy, copper, a copper alloy, nickel, a nickel alloy, titanium, a titanium alloy, iron, an iron alloy, silver, and a silver alloy.

10. The composite substrate of any one of claims 1 to 9, wherein the support layer comprises at least one of a polyethylene film, a polypropylene film, a polyvinylidene chloride film, and a multi-layer film in combination thereof.

11. The composite substrate of any one of claims 1 to 10, wherein at least one of the plurality of first through parts is spaced apart from an adjacent second through part, among the plurality of second through parts, by a second pitch along the first direction, and
the second pitch is in a range of about 0.25 µm to about 2 µm.

12. The composite substrate of any one of claims 1 to 11, wherein a tensile strength is in a range of about 250 MPa to about 500 MPa.

13. A rechargeable lithium battery comprising:
a composite substrate as defined in any one of the previous claims; and
a battery cell on the composite substrate,
wherein the composite substrate comprises:
a support layer having a first surface and a second surface that are opposite to each other,
a first metal layer disposed on the first surface, and
a second metal layer disposed on the second surface,
the support layer comprises:
a plurality of first through parts penetrating the first surface and spaced apart from each other along a first direction, and
a plurality of second through parts penetrating the second
surface and spaced apart from each other along the first direction,
the plurality of first through parts and the plurality of second through parts are alternately disposed along the first direction, and
the first direction is substantially parallel to the first surface.

14. The rechargeable lithium battery of claim 13, wherein the battery cell comprises:
a first active material layer on any one of the first meal layer and the second metal layer;
a separator on the first active material layer;
a second active material layer on the separator; and
a metal substrate on the second active material layer.

15. The rechargeable lithium battery of claim 13 or 14, wherein an uppermost surface of at least one of the plurality of second through parts is positioned at a lower level than the first surface, and
a lowermost surface of at least one of the plurality of first through parts is positioned at a higher level than the second surface.
